# EUROPÄISCHE PATENTSCHRIFT

(11) **EP 0 308 679 B1**
(45) Veröffentlichungstag und Bekanntmachung des Hinweises auf die Patenterteilung: **03.02.1993**
(21) Anmeldenummer: 88113893.7
(22) Anmeldetag: 25.08.1988
(51) Int. Cl.: B65D 25/32

(54) **Kunststoffbehälter mit angeformtem Henkel**
Plastic container with moulded handle
Récipient en plastique avec une anse moulée

(30) Priorität: 26.08.1987 DD 306362
(43) Veröffentlichungstag der Anmeldung: 29.03.1989
(73) Patentinhaber: NORKUN Norddeutsche Kunststoffverarbeitung GmbH, D-19057 Schwerin-Sacktannen (DE)
(72) Erfinder: Bauer, Hartmut, DDR-2792 Schwerin (DD); Müller, Detlef, DDR-2760 Schwerin (DD); Simon, Bernd, DDR-2794 Schwerin (DD)
(74) Vertreter: Jaap, Reinhard

(56) Entgegenhaltungen:
- EP-A- 0 114 095
- DE-U- 8 523 336
- LU-A- 66 109
- NL-A- 6 912 995

## Beschreibung

Die Erfindung betrifft einen Kunststoffbehälter mit angeformtem Henkel gemäß dem Oberbegriff des Patentanspruchs 1. Sie ist für die Anwendung bei der Massenfertigung spritzgegossener eimerförmiger Behälter, die im Haushalt oder als Transportverpackungsmittel eingesetzt werden und deren Henkel im gleichen Spritzgießwerkzeug mit geformt werden, besonders geeignet.

Aus der DE-U 85 23 336 ist ein Kunststoffbehälter bekannt, der wie der zugehörige Henkel getrennt im Spritzgießverfahren gefertigt und anschließend komplettiert wird, indem nach innen weisende Lagerzapfen des bügelförmigen Henkels durch einen kraftaufwendigen Rastvorgang in einander gegenüberliegenden äußeren Vorsprüngen der Behälterwand angelenkt werden. Die Lagerzapfen des Henkels münden jeweils in einem endständigen Bund, der im komplettierten Zustand hinter die Stirnwand des Vorsprunges rastet, wobei die obere Kontur einer nach unten freien Stirnwandöffnung die obere Lagerschale zur Aufnahme der Tragekräfte bildet. Oberhalb der Vorsprünge für die Henkellagerung endet der n-förmig ausgebildete Öffnungsrand des Eimers, der mit einer umlaufenden Rastlippe für die Deckelarretierung versehen ist.

Diese Lösung weist den entscheidenden Mangel des hohen Komplettierungsaufwandes auf, ist aber auch dadurch nachteilig, daß die aus Kunststoff geformten Lagerzapfen bei hohen Traglasten auf Dauer durch die einseitige obere Lagerbegrenzung aus der Achsrichtung ausgelenkt und damit auf Bruch beansprucht werden.

Bei dem aus der DE-A-24 05193 bekannten Kunststoffbehälter wird auf Behälterwandvorsprünge als Henkelaufnahme verzichtet und die Henkelaufnahme in der Nut des n-förmigen Randflansches ausgebildet. Behälter und Henkel sollen im gleichen Spritzgießzyklus geformt werden und sind über einen Materialfilm im Bereich des Henkeldurchtrittes am Randflansch miteinander verbunden. Durch eine Schwenkbewegung des Henkels nach der Entformung des Kunststoffteiles aus dem Werkzeug wird der Film zerstört und damit der Schwenkbereich des Henkels freigegeben. Der Randflansch ist für die Ausformung der Merkmale des Henkellagers notwendigerweise auch nach oben durchbrochen. Das beeinträchtigt nicht nur das Erscheinungsbild des Behälters sondern verringert auch die Dichtheit bei verschließbar zu gestaltenden Behältern und kompliziert das Anordnen eines umlaufend rastenden Deckels. Der zum Abreißen des erforderlichen Materialfilms notwendige Spalt zwischen Henkel und Randflansch stellt eine Hinterschneidung für die Entformung dar und ist nur mittels Seitenschieber und damit durch erhöhten werkzeugtechnischen Aufwand realisierbar.
Weiterhin ist aus der DE-A-3345217 eine Lösung bekannt, bei der gleichfalls der Randflansch durch Ausformungen durchbrochen wird, welche quer zu den Durchbrüchen des Henkelzapfenlagers angeordnet sind. Die Henkelzapfenenden weisen verbreiterte Ansätze auf. Wie auch bei der vorangeschilderten Lösung wird diese Ausführung einstückig in einem Spritzgießvorgang realisiert, wobei gleiche Nachteile hinsichtlich Dichtheit und erhöhter werkzeugtechnischer Aufwand zur Ausformung der quer zur Behälterachse angeordneten Lagerbohrungen vorliegen

Die aus der DE-A-35 40 059 bekannte Henkelaufnahme besteht aus Griffhaltekäfigen für einen ebenfalls einstückig angeformten Henkel. Der Materialfilm zwischen Behälterwand und Henkel verläuft axial zu den Lagerzapfen des Henkels. Die zur Henkelarretierung erforderlichen Konturen werden durch Formbacken, die radial zur Behälterachse mittels Führungssäulen bewegbar sind, gebildet. Ein derartige Aufbau erhöht den Kompliziertheitsgrad des Werkzeuges, was für eine störungsarme Produktion von Behältern in großen Stückzahlen mit vielen Spritzgießwerkzeugen nicht gerechtfertigt erscheint.

Der Erfindung liegt die Aufgabe zugrunde, einen Kunststoffbehälter mit angeformtem Henkel nach dem Dokument DE-A-3540059 zu schaffen, bei dem unter Verringerung des werkzeugtechnischen Aufwands die Krafteinleitung unter Belastung zwischen beiden Teilen verbessert wird und die Verschließbarkeit des Behälters durch einen Deckel gewährleistet bleibt.

Diese Aufgabe ist erfindungsgemäß durch die kennzeichnenden Merkmale des Patentanspruchs 1 gelöst.

Der Vorteil des erfindungsgemäßen Behälters gegenüber den bisher bekannten Lösungen besteht darin, daß dieser einen Werkzeugaufbau mit geringem Fertigungsaufwand für die Henkelaufnahmeelemente und eine Entformungsrichtung in Achsrichtung des Behälters ohne aufwendige Seitenschieber im Spritzgießwerkzeug ermöglicht. Erfindungsgemäß wird der umlaufende Behälterrand nicht unterbrochen, so daß ein wirksamer Deckelverschluß vorgesehen werden kann.
Damit kann eine wesentliche Rationalisierung der Fertigung von Massenprodukten, wie bspw. Eimern im Spritzgießverfahren verwirklicht werden.
Die Erfindung wird nachstehend am Beispiel eines kompletten 10 1-Haushaltseimers als einstückiges Spritzgießteil in zwei Ausführungsbeispielen erläutert.

In den Zeichnungen zeigen:

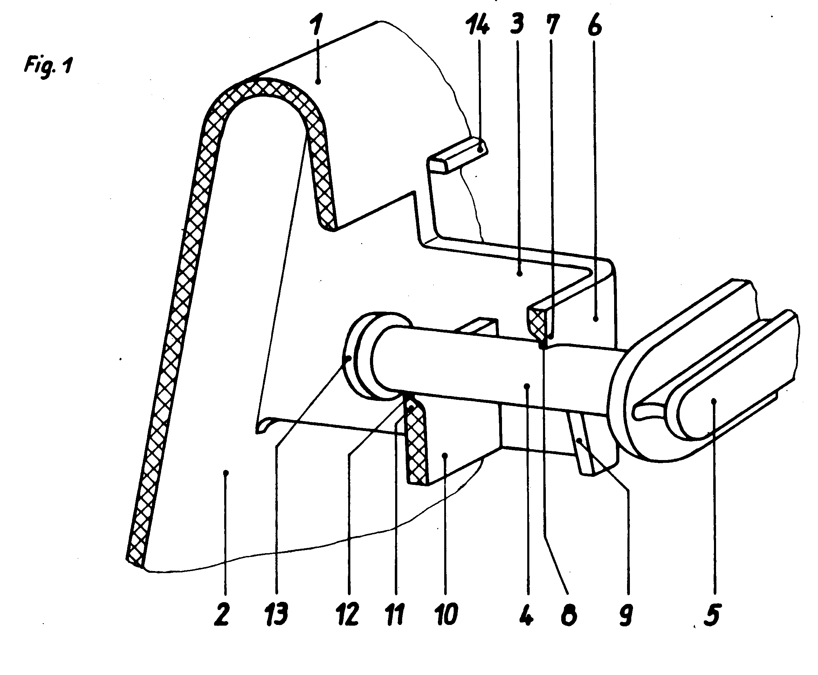

- Fig. 1: die perspektivische Darstellung eines Teilschnittes einer Henkelaufnahme eines Eimers;
- Fig. 2: die perspektivische Darstellung eines Teilschnittes der Henkelaufnahme eines anderen Ausführungsbeispiels und
- Fig. 3: einen Schnitt des geschlossenen Spritzgießwerkzeuges für die Fertigung des Kunststoffbehälters nach Fig. 2
Der umlaufende Behälterrand 1 weist an seiner Außenwand 2 einander gegenüberliegende schachtförmige Vorsprünge 3 auf, die je einen Lagerzapfen 4 des Henkels 5 aufnehmen. Dabei bildet die Stirnwand 6 des Vorsprungs 3 das obere Lager 7 für den Lagerzapfen 4. Der halbachsig vorhandene obere Materialfilm 8 an der Stirnwand 6 dient der Formmassezuführung vom Behälter zum Henkel 5 während des Spritzgießvorganges. Die untere Halbachse des Lagerzapfens 4 innerhalb der Stirnwand 6 liegt in einem trapezförmigen Freiraum, der einem Stirnwanddurchbruch 9 bildet. Als Gegenlager 11 für den Lagerzapfen 4 fungiert ein Zwischensteg 10 innerhalb des Vorsprunges 3, der gleichfalls zur Formmassezuführung vom Behälter zum Lagerzapfen 4 umschließenden unteren Materialfilmes 12 genutzt wird. Ein angeformter Bund 13 am Lagerzapfen 4 dient der Halterung im Henkelaufnahmeelement.

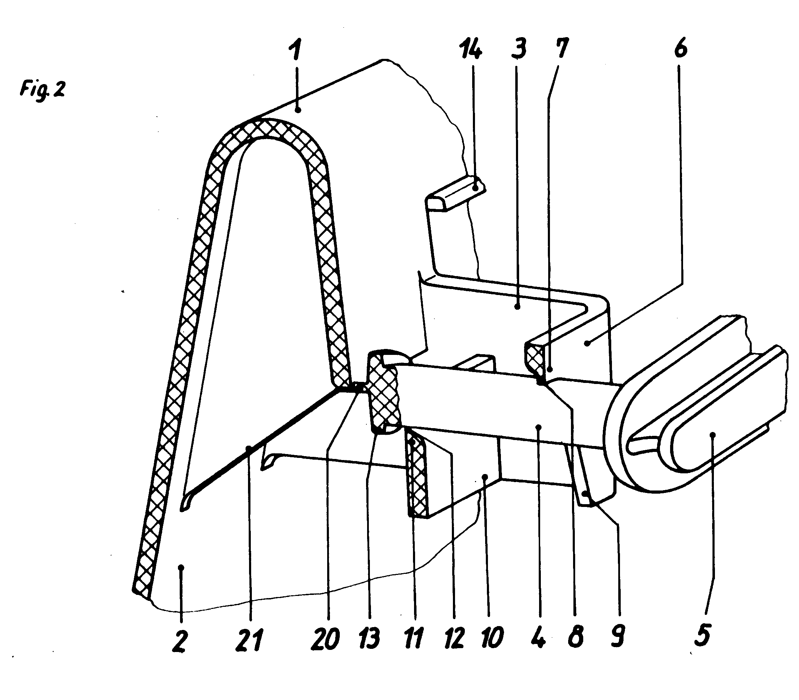

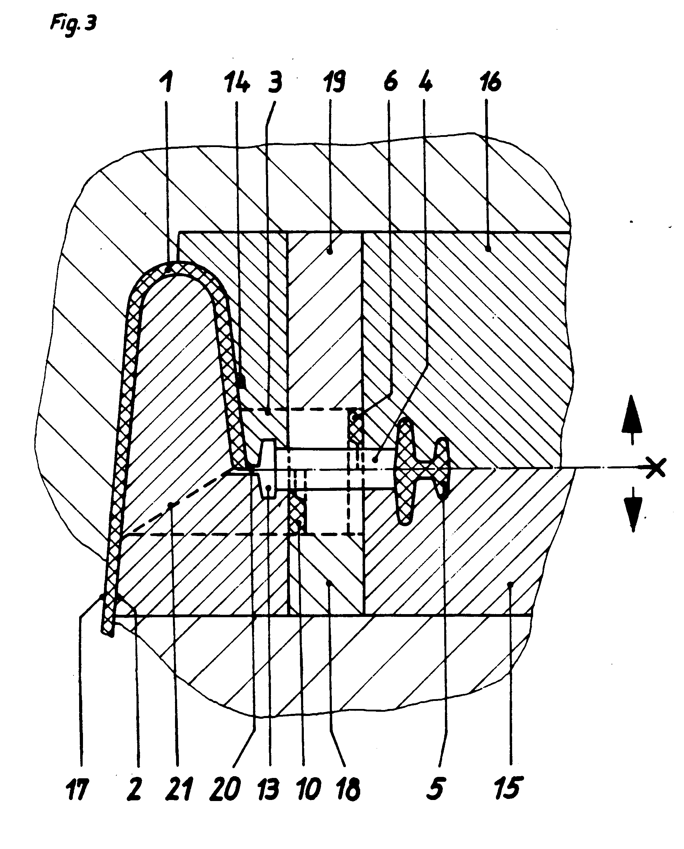

Bei dem Ausführungsbeispiel nach Fig. 2 gelangt ein zusätzlicher Anbindungssteg 21, der senkrecht in der umlaufenden n-förmigen Behälterrandnut verläuft und in seiner Verlängerung über den hinteren Materialfilm 20 mittig an den Bund 13 des Lagerzapfens 4 führt, zur Anwendung. Das kann in Abhängigkeit vom Fließverhalten des eingesetzten Materialtyps notwendig werden, um die Formnestfüllung zu erleichtern. Durch geringfügige Verschwenkung des Henkels 5 nach seiner Entformung, beliebigerweise in seine Ruhe- oder Gebrauchslage, werden die halbachsigen Materialfilme 8, 12 sowie der Materialfilm 20 zerstört und der Henkel 5 bewegbar. Der nach oben und unten in Richtung der Behälterachse offene Vorsprung 3 gestattet die Ausformung des Lagerzapfens 4 und der Lager 7, 11 in gleicher Entformungsrichtung wie des Behälters und des Henkels 5. Die abwärts weisende Kante des Behälterrandes 1 ist mit einer bekannten umlaufenden Rastlippe 14 für die Deckelarretierung versehen, die lediglich in den Bereichen über den Vorsprüngen 3 unterbrochen ist.
Werkzeugtechnisch realisierbar ist die Lösung wie in Fig. 3 dargestellt, durch einen die Henkelunterseite bildenden Konturring 15, der mit dem die Behälteraußenwand 2 bildenden Werkzeugteil verbunden ist. Die Henkeloberseite wird in einem weiteren Konturring 16 geformt, der mit dem die Innenwand 17 des Behälters bildenden Werkzeugteil verbunden ist. Gleichzeitig werden durch die Konturringe 15, 16 je halbachsig der Bund 13 und die Hälften des Lagerzapfens 4 geformt.

Die Lager 7, 11 für den Lagerzapfen 4 sind durch Kontureinsätze 18, 19 gebildet und werden über die Materialfilme 8, 12 ausgeformt. Dabei sind der Kontureinsatz 18 mit dem Konturring 15 verbunden und der Kontureinsatz 19 mit dem Konturring 16.

Unter Ausnutzung der elastischen Eigenschaften des Kunststoffes ist eine Überwindung des für die Bildung der Materialfilme erforderlichen Hinterschnittes möglich und damit eine in Behälterachsrichtung orientierte Entformung des kompletten Spritzgießteiles gegeben, ohne daß zusätzliche Bewegungsabläufe während der Entformung notwendig werden.

## Patentansprüche

1. Kunststoffbehälter mit angeformtem Henkel (5), der in einander gegenüberliegenden Vorsprüngen (3) der Behälterwand (2) schwenkbar gelagert ist, wobei die Vorsprünge (3) jeweils eine Stirnwand mit nach unten offenem Durchbruch (9) für die obere Lagerung von Lagerzapfen (4) des Henkels (5) aufweisen, dadurch gekennzeichnet, daß der Vorsprung (3) im Abstand zu seiner Stirnwand (6) mit einem inneren, ein Gegenlager bildenden Zwischensteg (10) versehen ist, auf dessen Oberkante der Lagerzapfen (4) abgestützt ist.

2. Kunststoffbehälter mit angeformtem Henkel nach Anspruch 1, dadurch gekennzeichnet, daß bei einer Henkelstellung etwa parallel zum Behälterrand (1) der Lagerzapfen (4) über einen Materialfilm (8) mit dem oberen Lager (7) und/oder über einen Materialfilm (12) mit dem Gegenlager (11) verbunden ist, bevor der Schwenkbereich durch eine Bewegung des Henkels (5) in Schwenkrichtung freigegeben wird.

3. Kunstoffbehälter mit angeformtem Henkel nach einem der Ansprüche 1 oder 2, dadurch gekennzeichnet, daß die Vorsprünge (3) unterhalb eines n-förmig umlaufenden Behälterrands (1) ausgeformt sind, daß in der senkrechten Ebene der Lagerzapfen (4) jeweils ein innerer Anbindungssteg (21) in der Behälterrandnut ausgebildet und vor der Henkelfreigabe über einen Materialfilm (20) mit dem Lagerzapfen (4) verbunden ist.

## Claims

1. A plastic container with a handle (5) moulded on which swivels in projections (3) located opposite each other on the container wall (2), whereby said projections (3) each possess an end surface with a penetration (9) which is open at the bottom to carry the bearing journal (4) of the handle (5), and characterized by the projection (3) having at some distance from its end surface (6) an internal intermediate web (10) forming a counterbearing supporting the bearing journal (4) on its top edge.

2. A plastic container with a handle moulded on according to claim 1 and characterized by the bearing journal (4) being connected by a film of material (8) to the top bearing (7) and/or by a film of material (12) to the counterbearing (11) when the handle is in a position roughly parallel to the container rim (1) before the swivelling range is released by movement of the handle (5) in the swivelling direction.

3. A plastic container with a handle moulded on according to claim 1 or 2 and characterized by the projections (3) being situated below an n-shaped continuous container rim (1), whereby the container rim groove contains in the vertical plane of each bearing journal (4) an internal connection web (21) which is connected to the bearing journal (4) by a film of material (20) before the handle is released.

## Revendications

1. Récipient en matière plastique à anse (5) à forme adaptée logée de manière rabattable dans les bosses (3) situées l'une en face de l'autre dans la paroi du récipient (2), les bosses possédant chacune une paroi frontale à passage (9) ouvert vers le bas pour le logement supérieur des tourillons (4) de l'anse (5), caractérisé par le fait que la bosse (3) dans l'écartement par rapport à sa paroi frontale (6) est dotée d'une entretoise (10) formant butée, sur le bord supérieur de laquelle le tourillon s'appuie.

2. Récipient en matière plastique à anse selon revendication 1, caractérisé par le fait qu'en position approximativement parallèle de l'anse au bord du récipient (1) le tourillon (4) est relié par une mince couche de matériau (8) au logement supérieur (7) et/ou par une mince couche de matériau (12) à la butée (11), avant que la zone de basculement soit libérée dans le sens de basculement par un déplacement de l'anse (5).

3. Récipient en matière plastique selon l'une des revendications 1 ou 2, caractérisé par le fait que les bosses (3) sont formées au-dessous d'un bord de récipient périphérique en forme de n (1), de manière que dans la position verticale des tourillons (4) une entretoise de liaison (21) pour chacun d'eux soit formée dans la rainure du bord du récipient et qu'elle soit reliée, avant la libération de l'anse, par une mince couche de matériau (20) au tourillon (4).
